Europäisches Patentamt

European Patent Office

Office européen des brevets

(11) Publication number: **0 372 105**
**A1**

## (12) EUROPEAN PATENT APPLICATION

(21) Application number: 88120306.1

(22) Date of filing: 06.12.88

(51) Int. Cl.⁵: **C08K 13/04, C09J 121/00,**
**//(C08K13/04,7:02,3:00)**

(43) Date of publication of application:
**13.06.90 Bulletin 90/24**

(84) Designated Contracting States:
**BE CH DE ES FR GB IT LI NL SE**

(71) Applicant: **BASF Aktiengesellschaft**
**Carl-Bosch-Strasse 38**
**D-6700 Ludwigshafen(DE)**

(72) Inventor: **Liu, Richard Waichun**
**1231 Wiltshire Street**
**Sarnia Ontario(CA)**
Inventor: **Midgley, Charles Andrew**
**2098 Clarence Street**
**Sarnia Ontario(CA)**
Inventor: **John, Colin Arnold**
**1221 Haight Lane**
**Sarnia Ontario(CA)**

(54) Laminating adhesives.

(57) Fibers having a length not less than that defined by the equation

$Lm = \sigma_F d/2 \tau$

wherein Lm is the minimum fiber length;

$\sigma_F$ is the tensile strength of the fiber;

d is the diameter of the fiber and is less than half the wet thickness of the adhesive; and

$\tau$ is the interfacial bond strength between fibre and compound may be used to strengthen laminating adhesives. Such adhesives were found to be useful in applications such as the manufacture of scrim backed carpets.

## EP 0 372 105 A1

## LAMINATING ADHESIVES

The present invention relates to laminating adhesives. More particularly, the present invention relates to "textile" laminating adhesives. These adhesives are used in applications where a textile material is adhered to a substrate such as shoe and boot linings, metalized fabrics, and most preferably carpetbackings.

When a backing is delaminated from a substrate there may be two causes of failure. The failure may be adhesive; this occurs when the adhesion between the substrate and the backing is low. On the other hand the failure may be cohesive in the adhesive compound; that is the tensile strength of the dried adhesive is exceeded. While the adhesive properties of a laminating adhesive may be adjusted to a certain extent by the wetting agents, there is little art relating to improving the cohesive strength of a laminating adhesive.

The "textile" laminating business has been under increasing economic pressure and has been going to higher filler levels in laminating adhesives. This has resulted in lower delamination strengths for these adhesives.

One approach to overcome this problem in the carpet industry is that disclosed in British Patent Specification 2,116,114 published September 21, 1983 assigned to Lintafoam (Manchester) Ltd. This patent teaches using a double layer adhesive. A highly filled primary layer comprising a carboxylated-SBR latex and from 200 to 1200 parts of a filler per 100 parts by weight of rubber (phr) is used in conjunction with a secondary coat of a gellable compound containing up to 100 phr of filler and a gelling agent. The delamination strength of a carpet prepared using this system should be commercially acceptable.

While this method seeks to overcome delamination strength problems for carpets backed with various materials, it has a disadvantage in that it is a two compound process which requires two successive coating operations. Additionally, the cohesive strength will only be as strong as that of the compound which has the lower cohesive strength.

The present invention seeks to provide a highly filled adhesive composition which may be used in laminating operations.

The present invention provides a highly filled aqueous based laminating adhesive containing about 65 to about 85 weight percent solids comprising per 100 parts by weight of a polymer selected from the group consisting of:

A) polymers comprising:

i) from 80 to 20 weight percent of a mixture comprising 100 to 55 weight percent of one or more monomers selected from the group consisting of $C_{8-12}$ monovinyl or vinylidene aromatic monomers which may be unsubstituted or substituted by a $C_{1-4}$ alkyl radical or a chlorine or bromine atom; and from 0 to about 45 weight percent of one or more monomers selected from the group consisting of $C_{2-6}$ alkenyl nitrile, and $C_{1-2}$ alkyl esters of methacrylic acid;

ii) from 80 to 20 weight percent of one or more $C_{4-6}$ aliphatic conjugated diolefins which may be unsubstituted or substituted by a chlorine atom; and

iii) optionally up to 10 weight percent of one or more monomers selected from the group consisting of:

a) $C_{3-6}$ ethylenically unsaturated carboxylic acids;

b) $C_{3-6}$ ethylenically unsaturated aldehydes;

c) $C_{1-4}$ alkyl and hydroxy alkyl esters of $C_{3-6}$ ethylenically unsaturated carboxylic acids; and

d) amides of $C_{3-6}$ ethylenically unsaturated carboxylic acids, which amides may be unsubstituted or substituted at the nitrogen atom by up to two radicals selected from the group $C_{1-4}$ alkyl radicals and $C_{1-4}$ hydroxy alkyl radicals;

B) polymers comprising:

i) from 90 to 100 weight percent of one or more monomers selected from the group consisting of $C_{4-6}$ aliphatic conjugated diolefins which may be unsubstituted or substituted by a chlorine atom; and

ii) optionally up to 10 weight percent of one or more monomers selected from the group consisting of:

a) $C_{3-6}$ ethylenically unsaturated carboxylic acids;

b) $C_{3-6}$ ethylenically unsaturated aldehydes;

c) $C_{1-4}$ alkyl and hydroxy alkyl esters of $C_{3-6}$ ethylenically unsaturated carboxylic acids; and

d) amides of $C_{3-6}$ ethylenically unsaturated carboxylic acids, which amides may be unsubstituted or substituted at the nitrogen atom by up to two radicals selected from the group $C_{1-4}$ alkyl radicals and $C_{1-4}$ hydroxy alkyl radicals;

C) polymers comprising:

2

i) from 5 to 40 weight percent of a $C_{2-3}$ olefin;

ii) at least 55 weight percent of one or more monomers selected from the group consisting of $C_{2-8}$ alkenyl esters of $C_{1-8}$ saturated carboxylic acids; and $C_{1-8}$ alkyl and hydroxy alkyl esters of $C_{3-6}$ ethylenically unsaturated carboxylic acids; and

iii) optionally up to 10 weight percent of one or more monomers selected from the group consisting of:

a) $C_{3-6}$ ethylenically unsaturated carboxylic acids;

b) $C_{3-6}$ ethylenically unsaturated aldehydes; and

c) amides of $C_{3-6}$ ethylenically unsaturated carboxylic acids, which amides may be unsubstituted or substituted at the nitrogen atom by up to two radicals selected from the group consisting of $C_{1-4}$ alkyl radicals and $C_{1-4}$ hydroxy alkyl radicals;

D) polymers comprising:

i) from 85 to 100 weight percent of one or more monomers selected from the group consisting of $C_{2-8}$ alkenyl esters of $C_{1-8}$ saturated carboxylic acids and $C_{1-8}$ alkyl and hydroxyakyl esters of $C_{3-6}$ ethylenically unsaturated carboxylic acids; and

ii) optionally up to 15 weight percent of one or more monomers selected from the group consisting of:

a) $C_{3-6}$ ethylenically unsaturated carboxylic acids;

b) $C_{3-6}$ ethylenically unsaturated aldehydes; and

c) amides of $C_{3-6}$ ethylenically unsaturated carboxylic acids, which amides may be unsubstituted or substituted at the nitrogen atom by up to two radicals selected from the group consisting of $C_{1-4}$ alkyl radicals and $C_{1-4}$ hydroxy alkyl radicals;

E) polymers comprising:

i) from 80 to 20 weight percent of vinyl or vinylidene chloride; and

ii) from 20 to 80 weight percent of one or more monomers selected from the group consisting of $C_{1-8}$ alkyl and hydroxy alkyl esters of $C_{3-8}$ ethylenically unsaturated carboxylic acids; and $C_{2-3}$ olefins and

iii) optionally up to 10 weight percent of one or more monomers selected from the group consisting of:

a) $C_{3-6}$ ethylenically unsaturated carboxylic acids;

b) $C_{3-6}$ ethylenically unsaturated aldehydes; and

c) amides of $C_{3-6}$ ethylenically unsaturated carborylic acids, which amides may be unsubstituted or substituted at the nitrogen atom by up to two radicals selected from the group consisting of $C_{1-4}$ alkyl radicals and $C_{1-4}$ hydroxy alkyl radicals; and

F) polymers comprising:

i) from 15 to 45 weight percent of at least one $C_{3-8}$ alkenyl nitrile;

ii) from 85 to 55 weight percent of one or more $C_{4-6}$ aliphatic conjugated diolefins; and

iii) optionally up to 10 weight percent of one or more monomers selected from the group consisting of:

a) $C_{3-6}$ ethylenically unsaturated carboxylic acids;

b) $C_{3-6}$ ethylenically unsaturated aldehydes;

c) $C_{1-4}$ alkyl and hydroxy alkyl esters of $C_{3-6}$ ethylenically·unsaturated carboxylic acids; and

d) amides of $C_{3-6}$ ethylenically unsaturated carboxylic acids, which amides may be unsubstituted or substituted at the nitrogen atom by up to two radicals selected from the group consisting of $C_{1-4}$ alkyl radicals and $C_{1-4}$ hydroxy alkyl radicals; from about 100 to 800 parts by weight of a particulate filler; and from about 0.5 to 15 parts by weight of a fibrous material having a minimum length defined by the equation

$$Lm = \sigma_F d/2 \tau$$

wherein Lm is the minimum fiber length;

$\sigma F$ is the tensile strength of the fiber;

d is the diameter of the fiber;

$\tau$ is the interfacial bond strength between the fiber and the compound;

said diameter of the fiber being selected so that it is not more than 0.5 of the wet thickness at which the laminating adhesive is applied.

A number of types of polymers are suitable for use in the present invention.

Generally, these polymers include styrene-butadiene polymers (SB); polydiene polymers, olefin-ester copolymers, vinyl esters; acrylic polymers; copolymers of vinyl and vinylidene chloride and co-polymers of dienes and acrylonitrile. The polymers may also contain a functional monomer such as a copolymerizable carboxylic acid, aldehyde, amide or ester.

3

EP 0 372 105 A1

Suitable styrene-butadiene type polymers comprise:

from 80 to 20, preferably 50 to 70 weight percent of a mixture comprising 100 to 55 weight percent of one or more monomers selected from the group consisting of $C_{8-12}$ monovinyl or vinylidene aromatic monomers which may be unsubstituted or substituted by a $C_{1-4}$ alkyl radical or a chlorine or bromine atom and from 0 to about 45 weight percent of one or more monomers selected from the group consisting of $C_{2-6}$ alkenyl nitrile, and $C_{1-2}$ alkyl esters of methacrylic acid; and from 80 to 20, preferably from 49 to 30 weight percent of one or more $C_{4-6}$ aliphatic conjugated diolefins which may be unsubstituted or substituted by a chlorine atom.

As noted above such polymers may contain up to 10 preferably up to 5, most preferably from 0.5 to 5 weight percent of one or more functional monomers selected from the group consisting of:

a) $C_{3-6}$ ethylenically unsaturated carboxylic acids;

b) $C_{3-6}$ ethylenically unsaturated aldehydes;

c) $C_{1-4}$ alkyl and hydroxy alkyl esters of $C_{3-6}$ ethylenically unsaturated carboxylic acids; and

d) amides of $C_{3-6}$ ethylenically unsaturated carboxylic acids, which amides may be unsubstituted or substituted at the nitrogen atom by up to two radicals selected from the group consisting of $C_{1-4}$ alkyl radicals and $C_{1-4}$ hydroxy alkyl radicals;

Suitable monovinyl or vinylidene aromatic monomers include styrene or alpha-methyl styrene. Suitable acrylates include methyl acrylate, ethyl acrylate, methyl methacrylate and ethyl methacrylate. The polymer may optionally contain minor amounts of nitriles, such as acrylonitrile. If present a preferred range of nitrile is from about 20 to 45 weight percent. Suitable $C_{4-6}$ conjugated dienes include butadiene, isoprene and chloroprene. Suitable functional monomers include one or more monomers selected from the group consisting of acrylic acid, methacrylic acid, itaconic acid, fumaric acid, methyl methacrylate, ethyl methacrylate, 2-hydroxy-ethyl methacrylate, 2-ethyl hexyl methacrylate, methyl acrylate, ethyl acrylate, 2-hydroxy ethyl acrylate, 2-ethyl hexyl acrylate, acrolein, acrylamide, methacrylamide, N-methylol acrylamide, and N-methylol methacrylamide.

A preferred SBR type polymer comprises 50 to 69.5 weight percent styrene; 45 to 30 weight percent of butadiene and from 0.5 to 5 weight percent of one or more of the above noted functional monomers.

Suitable polydiene polymers comprise from 90 to 100 weight percent of one or more of the above noted $C_{4-6}$ conjugated diolefins. These polymers may also contain up to 10, preferably up to 5, most preferably from 0.5 to 5, weight percent of one or more of the above noted functional monomers.

Suitable olefin polymers comprise polymers of ethylene or propylene with vinyl esters, acrylic type esters or a mixture thereof. Such polymers may additionally contain a functional monomer.

The olefin polymers comprise:

from 5 to 40, preferably from 5 to 30, most preferably from 10 to 25, weight percent of ethylene or propylene;

at least about 55, preferably from 95 to 70 weight percent of one or more members selected from the group consisting of $C_{2-8}$ alkenyl esters of a $C_{1-8}$ saturated carboxylic acid, or $C_{1-8}$ alkyl or hydroxy alkyl esters of $C_{3-6}$ ethylenically unsaturated carboxylic acids, or a mixture thereof and

up to about 10, preferably less than 5, most preferably from 0.5 to 5, weight percent of one or more of the above listed functional monomers.

Suitable $C_{2-8}$ alkenyl esters of $C_{1-8}$ saturated carboxylic acids include vinyl acetate and vinyl propioniate. Suitable $C_{1-8}$ alkyl and hydroxy alkyl esters of $C_{3-8}$ ethylenically unsaturated carboxylic acids include methyl acrylate, methyl methacrylate, ethyl-acrylate, ethyl methacrylate, hydroxy ethyl acrylate, and ethyl hexyl acrylate. The polymer may contain a mixture of the above esters.

The above polymers may also contain up to 10, preferably up to 5, most preferaly from 0.5 to 5 weight percent of one or more of the above noted functional monomers.

Suitable vinyl esters are polymers which contain a significant proportion such as from 90 to 100 percent of a $C_{2-8}$ alkenyl ester of a $C_{1-8}$ saturated carboxylic acid. These polymers may also contain functional monomers of the types and in the amount discussed above. Vinyl acetate is representative of this type of polymer.

Suitable acrylic polymers comprise from 85 to 100 weight % of one or more of the above $C_{1-8}$ alkyl or hydroxyalkyl esters of $C_{3-6}$ ethylenically unsaturated carboxylic acids and up to 25 weight % of one or more of the above functional monomers.

Suitable polymers include the polyvinyl and polyvinylidene type of polymers. These polymers comprise from 80 to 20, preferably from 80 to 50, weight percent of vinyl or vinylidene chloride and from 20 to 80 preferably from 20 to 50, weight percent of one or more monomers selected from the group consisting of $C_{1-8}$ alkyl and hydroxyalkyl esters of $C_{3-8}$ ethylencially unsaturated carboxylic acids. The polymers may also contain up to about 10, preferably up to 5, most preferably from 0.5 to 5 weight percent of a functional

4

monomer. Suitable functional monomers and esters of $C_{3-8}$ ethylenically unsaturated carboxylic acids have been discussed above.

The polymer may be a copolymer of a diene and a nitrile. Generally these polymers comprise from about 15 to 45, preferably from 20 to 40 weight percent of a $C_{3-8}$ alkenyl nitrile; and from 85 to 55, preferably from 80 to 60 weight percent of a $C_{4-6}$ aliphatic conjugated diolefin. The polymer may contain up to about 10, preferably up to 5, most preferably from 0.5 to 5 weight percent of one or more functional monomers. Suitable nitrile, diolefin and functional monomers have been described above.

The polymers are used in the form of a latex. Generally, the polymers are prepared by emulsion polymerization. The latex may, although it is less desirable, be prepared by dispersing particulate polymer in water. The latex may have a polymer content from about 30 to 70 weight percent. The processes for preparing latices of these polymers are well known and do not form part of the present invention.

The adhesive compounds of the present invention are highly filled. They contain from about 100 to 800, preferably from 300 to 550 parts by weight per 100 parts by weight of polymer of a finely divided filler. Suitable fillers include one or more members of the group consisting of: clay, calcium carbonate, talc, titanium dioxide, zinc sulfide, barium sulfate, carbon black, mica powder and reinforcing resins such as high styrene, or PVC resins.

In addition to the particulate filler the adhesive contains from about 0.5 to 10, preferably less than 5, most preferably from 0.5 to 5 parts by weight per 100 parts by weight of polymer of a fiber. The amount of fiber required will vary depending on the compound, the backing, and the substrate. The fiber must have a minimum length defined by the equation:

$$Lm = \sigma_F \, d/2 \, \tau$$

in which Lm is the minimum fiber length;

$\sigma F$ is the tensile strength of the fiber;

d is the diameter of the fiber; and

$\tau$ is the interfacial bond strength between the fiber and the compound.

While the above formula defines a minimum fiber length staple fibers may be purchased at standard lengths. For the carpet backing industry a useful minimum glass fiber length is about 0.3 cm and a cellulose fiber length of about 0.2 cm. In some cases it may be difficult to compound the fiber directly into the latex or compound. In such instances the fiber may be prepared as a 2 to 10 percent aqueous slurry with a dispersant and compounded with the latex.

Suitable fibers include cellulose fibers, wool fibers, viscose fibers, polyester fibers, polyolefin fibers, polyamide fibers, fibers of copolymers of diamides and dicarboxylic acids, aramid fibers, glass fibers, carbon fibers, and metal fibers. Preferred fibers are cellulose and glass.

The adhesive is compounded in a standard manner using sound compounding methods.

The adhesive is applied in a conventional manner. Care must be taken to ensure there is an even distribution of fibers throughout the compound. The application means should be selected to minimize problems of fiber buildup. For carpet backing the wet coat weight may range from about 338.0 to 1525 g/m$^2$ (10 to 45 oz/yd$^2$). Typical wet coat weights are from about 508 to 1186 g/m$^2$ (15 to 35 oz/yd$^2$).

After coating, the adherend is married to the substrate generally by passing them both over a marriage roller and then between two nip rolls. Many types of adherends are available depending on the substrate. In carpet backing, preferred adherends are made of cellulosic material. The most preferred backing is jute. Generally, the substrate will be coated but, if desired the adherend or backing may also be coated. The substrate and adherend laminate is then dried. Any suitable drying technique may be used including tunnel dryers, dielectric heating and microwave heating. For carpet backing typical drying conditions include the use of a tunnel dryer at about 150°C for from about 1 to 10 minutes. The line speed and oven conditions may be varied to obtain suitable drying. In the carpet industry line speeds from about 10 to 25 m/min (30 to 75 ft/min) are typical.

For carpet backing the delamination strength should be not less than about 357.2 g/m (2.0 lb/inch width) and preferably higher.

For other substrates and applications the drying conditions and delamination strength may vary. The manufacturer will have to determine suitable drying conditions based on this equipment and operation.

The following examples are intended to illustrate the invention and are not intended to limit it. Unless otherwise specified in the examples, ingredients are listed as parts by dry weight.

EXAMPLES

Example 1

An aqueous slurry of 2.3 percent cellulose fibers having a minimum fiber length of 0.2cm was prepared. The fiber length was selected to exceed the theoretical minimum fiber length calculated in accordance with the above equation. Another 6.4% aqueous slurry of glass fibers having a minimum fiber length of 1.0cm was also prepared. The length of glass fiber was also chosen to exceed the theoretical minimum fiber length calculated in accordance with the above equation.

A series of compounds were prepared based upon a commercially available carboxylated styrene butadiene latex sold as POLYSAR 458. The compounds were coated on the back of a carpet at a dry coat weight of 1186 to 1220 g/m² (35-36 oz/yd²). A jute backing was placed in contact with the adhesive and the sample was dried in a laboratory oven at 135°C for 20 min. The resulting samples were then tested for delamination strength and tuftlock.

The results are set forth in Table I.

Table I

| Compound - | Control | 1 | 2 | 3 | 4 | 5 | 6 |
|---|---|---|---|---|---|---|---|
| POLYSAR 458 | 100 | 100 | 100 | 100 | 100 | 100 | 100 |
| Calcium carbonate | 450 | 450 | 450 | 450 | 450 | 450 | 450 |
| Glass fiber as 6.4% slurry | --- | 2.5 | 5 | 10 | -- | -- | -- |
| Cellulose fiber as 2.3% slurry | --- | -- | -- | -- | 2.5 | 5 | 10 |
| Backing Adhesion g/cm width | 625 | 803 | 910 | 857 | 964 | 767 | 714 |
| (lb/inch width) | (3.5) | (4.5) | (5.1) | (4.8) | (5.4) | (4.3) | (4.0) |
| Tuft lock kg | 4.7 | 5.3 | 5.2 | 4.7 | 6.4 | 7.5 | 5.2 |
| Tuft lock (lb.) | (10.3) | (11.7) | (11.4) | (10.4) | (14.1) | (16.5) | (11.4) |

The results show an improvement in delamination strength. The improvement starts to decline at about 10 parts of fiber.

In the experiments, when glass fibers were used, the compound was diluted by the amount of water added in the slurry.

Experiments 1, 2, 3 were repeated except that the glass fiber was added dry and hence no dilution of the compound occurred.

The results are reported in Table II.

Table II

| Compound - | Control | A | B | C |
|---|---|---|---|---|
| POLYSAR 458 | 100 | 100 | 100 | 100 |
| Calcium carbonate | 450 | 450 | 450 | 450 |
| Glass fiber (dry) | ----- | 2.5 | 5 | 10 |
| Delamination gm/cm width | 625 | 1143 | 982 | 910 |
| (lb/in width) | (3.5) | (6.4) | (5.5) | (5.1) |
| Tuftlock kg | 4.7 | 4.1 | 7.7 | 5.4 |
| Tuftlock (lb.) | (10.3) | (9.0) | (16.9) | (11.9) |

**Claims**

1. A highly filled aqueous based laminating adhesive containing about 65 to about 85 weight percent solids comprising per 100 parts by weight of a polymer selected from the group consisting of:
A) polymers comprising:
i) from 80 to 20 weight percent of a mixture comprising 100 to 55 weight percent of one or more monomers selected from the group consisting of $C_{8-12}$ monovinyl or vinylidene aromatic monomers which may be unsubstituted or substituted by a $C_{1-4}$ alkyl radical or a chlorine or bromine atom; and from 0 to about 45 weight percent of one or more monomers selected from the group consisting of $C_{2-6}$ alkenyl nitrile, and $C_{1-2}$ alkyl esters of methacrylic acid;

ii) from 80 to 20 weight percent of one or more $C_{4-6}$ aliphatic conjugated diolefins which may be unsubstituted or substituted by a chlorine atom; and

iii) optionally up to 10 weight percent of one or more monomers selected from the group consisting of:

a) $C_{3-6}$ ethylenically unsaturated carboxylic acids;

b) $C_{3-6}$ ethyl en ically unsaturated aldehydes; and

c) amides of $C_{3-6}$ ethylenically unsaturated carborylic acids, which amides may be unsubstituted or substituted at the nitrogen atom by up to two radicals selected from the group consisting of $C_{1-4}$ alkyl radicals and $C_{1-4}$ hydroxy alkyl radicals;

B) polymers comprising:

i) from 90 to 100 weight percent of one or more monomers selected from the group consisting of $C_{4-6}$ aliphatic conjugated diolefins which may be unsubstituted or substituted by a chlorine atom; and

ii) optionally up to 10 weight percent of one or more monomers selected from the group consisting of:

a) $C_{3-6}$ ethylenically unsaturated carboxylic acids;

b) $C_{3-6}$ ethylenically unsaturated aldehydes;

c) $C_{1-4}$ alkyl and hydroxy alkyl esters of $C_{3-6}$ ethylenically unsaturated carboxylic acids; and

d) amides of $C_{3-6}$ ethylenically unsaturated carboxylic acids, which amides may be unsubstituted or substituted at the nitrogen atom by up to two radicals selected from the group $C_{1-4}$ alkyl radicals and $C_{1-4}$ hydroxy alkyl radicals;

C) polymers comprising:

i) from 5 to 40 weight percent of a $C_{2-3}$ olefin;

ii) at least 55 weight percent of one or more monomers selected from the group consisting of $C_{2-8}$ alkenyl esters of $C_{1-8}$ saturated carboxylic acids; and $C_{1-8}$ alkyl and hydroxy alkyl esters of $C_{3-6}$ ethylenically unsaturated carboxylic acids; and

iii) optionally up to 10 weight percent of one or more monomers selected from the group consisting of:

a) $C_{3-6}$ ethylenically unsaturated carboxylic acids;

b) $C_{3-6}$ ethylenically unsaturated aldehydes; and

c) amides of $C_{3-6}$ ethylenically unsaturated carboxylic acids, which amides may be unsubstituted or substituted at the nitrogen atom by up to two radicals selected from the group consisting of $C_{1-4}$ alkyl radicals and $C_{1-4}$ hydroxy alkyl radicals;

D) polymers comprising:

i) from 85 to 100 weight percent of one or more monomers selected from the group consisting of $C_{2-8}$ alkenyl alkenyl esters of $C_{1-8}$ saturated carboxylic acids and $C_{1-8}$ alkyl and hydroxyalkyl esters of $C_{3-6}$ ethylenically unsaturated carboxylic acids; and

ii) optionally up to 15 weight percent of one or more monomers selected from the group consisting of:

a) $C_{3-6}$ ethylenically unsaturated carboxylic acids;

b) $C_{3-6}$ ethylenically unsaturated aldehydes; and

c) amides of $C_{3-6}$ ethylenically unsaturated carboxylic acids, which amides may be unsubstituted or substituted at the nitrogen atom by up to two radicals selected from the group consisting of $C_{1-4}$ alkyl radicals and $C_{1-4}$ hydroxy alkyl radicals;

E) polymers comprising:

i) from 80 to 20 weight percent of vinyl or vinylidene chloride; and

ii) from 20 to 80 weight percent of one or more monomers selected from the group consisting of $C_{1-8}$ alkyl and hydroxy alkyl esters of $C_{3-8}$ ethylenically unsaturated carboxylic acids and $C_{2-3}$ olefins; and

iii) optionally up to 10 weight percent of one or more monomers selected from the group consisting of:

a) $C_{3-6}$ ethylenically unsaturated carboxylic acids;

b) $C_{3-6}$ ethylenically unsaturated aldehydes; and

c) amides of $C_{3-6}$ ethylenically unsaturated carboxylic acids, which amides may be unsubstituted or substituted at the nitrogen atom by up to two radicals selected from the group consisting of $C_{1-4}$ alkyl radicals and $C_{1-4}$ hydroxy alkyl radicals; and

F) polymers comprising:

i) from 15 to 45 weight percent of at least one $C_{3-8}$ alkenyl nitrile;

ii) from 85 to 55 weight percent of one or more $C_{4-6}$ aliphatic conjugated diolefins; and

iii) optionally up to 10 weight percent of one or more monomers selected from the group consisting of:

a) $C_{3-6}$ ethylenically unsaturated carboxylic acids;

b) $C_{3-6}$ ethylenically unsaturated aldehydes;

c) $C_{1-4}$ alkyl and hydroxy alkyl esters of $C_{3-6}$ ethylenically unsaturated carboxylic acids; and

d) amides of $C_{3-6}$ ethylenically unsaturated carboxylic acids, which amides may be unsubstituted or substituted at the nitrogen atom by up to two radicals selected from the group consisting of $C_{1-4}$ alkyl radicals and $C_{1-4}$ hydroxy alkyl radicals;

from about 100 to 800 parts by weight of a particulate filler; and from about 0.5 to 15 parts by weight of a fibrous material having a minimum length defined by the equation

$$Lm = \sigma_F d/2 \, \tau$$

wherein Lm is the minimum fiber length;

$\sigma F$ the tensile strength of the fiber;

d is the diameter of the fiber;

$\tau$ is the inter facial bond strength between the fiber and the compound;

said diameter of the fiber being selected so that it is not more than 0.5 of the wet thickness at which the laminating adhesive is applied.

2. An adhesive according to Claim 1 wherein the particulate filler is present in an amount from 300 to 550 parts by weight per 100 parts by weight of said polymer and is selected from the group consisting of clay, calcium carbonate, talc, titanium dioxide, zinc sulfide, barium sulfate, carbon black, mica powder and high styrene resins.

3. An adhesive according to Claim 2 wherein said fiber is selected from the group consisting of cellulose fibers, wool fibers, viscose fibers, polyester fibers, polyolefin fibers, polyamide fibers, fibers of copolymers of diamides and dicarboxylic acids, aramid fibers, glass fibers, carbon fibers, and metal fibers.

4. An adhesive according to Claim 3 wherein the fiber is present in an amount from 0.5 to 5 parts by weight per 100 parts by weight of polymers.

5. An adhesive according to Claim 4 wherein the polymer comprises:

i) from 20 to 80 weight percent of one or more monomers selected from the group consistng of styrene and alpha methyl styrene;

ii) from 80 to 20 weight percent of one or more monomers selected from the group consisting of 1,3 butadiene, isoprene, and chloroprene; and

iii) from 0 to 5 weight percent of one or more monomers selected from the group consisting of acrylic acid, methacrylic acid, itaconic acid, fumaric acid, methyl methacrylate, ethyl methacrylate, 2-hydroxy-ethyl methacrylate, 2-ethyl hexyl methacrylate, methyl acrylate, ethyl acrylate, 2-hydroxy ethyl acrylate, 2-ethyl hexyl acrylate, acrolein, acrylamide, methacrylamide, N-methylol acrylamide, and N-methylol acrylamide.

6. An adhesive according to Claim 5 wherein said polymer comprises:

i) from 50 to 69.5 weight percent of styrene;

ii) from 45 to 30 weight percent of butadiene;

iii) from 0.5 to 5 weight percent of one or more monomers selected from the group consisting of acrylic acid, methacrylic acid, itaconic acid, fumaric acid, methyl methacrylate, ethyl methacrylate, 2-hydroxy-ethyl methacrylate, 2-ethyl hexyl methacrylate, methyl acrylate, ethyl acrylate, 2-hydroxy ethyl acrylate, 2-ethyl hexyl acrylate, acrolein, acrylamide, methacrylamide, N-methylol acrylamide, and N-methylol acrylamide.

7. An adhesive according to Claim 4 wherein the polymer comprises:

i) from 5 to 30 weight percent of ethylene;

ii) from 95 to 70 weight percent of one or more monomers selected from the group consisting of vinyl acetate, methyl acrylate, ethyl acrylate, methyl methacrylate, methyl methacrylate; and

iii) from 0 to 5 weight percent of one or more monomers selected from the group consisting of acrylic acid, methacrylic acid, itaconic acid, fumaric acid, methyl methacrylate, ethyl methacrylate, 2-hydroxy-ethyl methacrylate, 2-ethyl hexyl methacrylate, methyl acrylate, ethyl acrylate, 2-hydroxy ethyl acrylate, 2-ethyl hexyl acrylate, acrolein, acrylamide, methacrylamide, N-methylol acrylamide, and N-methylol acrylamide.

8. An adhesive according to Claim 6 which is capable of providing a delamination strength between a carpet and a woven, or non woven carpet backing selected from the group comprising jute, polyesters, and polyamides of at least 4.0 lb. per linear inch.

9. An adhesive according to Claim 7 which is capable of providing a delamination strength between a carpet and a woven, or non woven carpet backing selected from the group comprising jute, polyesters, and polyamides of at least 4.0 lb. per linear inch.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-1 037 947 (MONSANTO CO.) <br> * Page 5 - page 6, line 40; claims 1-5,24 * <br> --- | 1 | C 08 K 13/04 <br> C 09 J 121/00 // <br> (C 08 K 13/04 <br> C 08 K 7:02 <br> C 08 K 3:00 ) |
| A | US-A-4 350 723 (SUGIMURA et al.) <br> * Claims 1,3; column 2, lines 50-65 * <br> ----- | 1 | |

TECHNICAL FIELDS SEARCHED (Int. Cl.5)

C 08 K
C 08 L
C 09 J

The present search report has been drawn up for all claims

| Place of search | Date of completion of the search | Examiner |
|---|---|---|
| THE HAGUE | 19-07-1989 | SCHUELER D.H.H. |

EPO FORM 1503 03.82 (P0401)